# EUROPÄISCHE PATENTSCHRIFT

(11) **EP 1 118 924 B1**
(45) Veröffentlichungstag und Bekanntmachung des Hinweises auf die Patenterteilung: **20.07.2016**
(21) Anmeldenummer: 00100994.3
(22) Anmeldetag: 19.01.2000
(51) Int. Cl.: G06F 21/75, G06F 21/55, G06K 19/073, G06F 12/14

(54) **VERFAHREN ZUM BETRIEB EINER MIKROPROZESSORANORDNUNG UND MIKROPROZESSORANORDNUNG**
MICROPROCESSOR SYSTEM AND METHOD OF OPERATION
PROCÉDÉ DE FONCTIONNEMENT ET SYSTÈME À MICROPROCESSEUR

(43) Veröffentlichungstag der Anmeldung: 25.07.2001
(73) Patentinhaber: Infineon Technologies AG, 85579 Neubiberg (DE)
(72) Erfinder: Kniffler, Oliver, 81737 München (DE)
(74) Vertreter: Zimmermann, Tankred Klaus

(56) Entgegenhaltungen:
- GB-A- 2 119 978
- US-A- 5 754 647
- DALLAS SEMICONDUCTOR CORP.: "SECTION 1: INTRODUCTION" 6. Oktober 1993 (1993-10-06) , DATA BOOK SOFT MICROCONTROLLER, PAGE(S) 1-3,7,8,73,77-80,82,152-156,229,290-292 XP002053731 * Abbildungen 3-1,9-3 * * Seite 8, linke Spalte, Absatz 2 - rechte Spalte, Absatz 2 * * Seite 73, linke Spalte, Absatz 1 - rechte Spalte, letzter Absatz * * Seite 78, linke Spalte, Absatz 1 - rechte Spalte, letzter Absatz *

## Beschreibung

Die Erfindung betrifft ein Verfahren zum Betrieb einer Mikroprozessoranordnung mit einer ersten und einer weiteren Einheit, einem Bus, über den diese Einheiten miteinander verbunden sind mit einer Leitung für ein Zustandssignal und Leitungen für weitere Bussignale sowie einer Bussteuereinheit zur Steuerung von Zugriffen der ersten Einheit auf die weitere Einheit. Außerdem betrifft die Erfindung eine Mikroprozessoranordnung, die zur Durchführung des Verfahrens geeignet ist.

Mikroprozessoranordnungen umfassen neben der zentralen Verarbeitungs- und Steuereinheit (CPU) weitere Einheiten wie Speicher oder periphere Einheiten zur Signaleingabe und Signalausgabe auf einem einzigen Chip integriert, sogenannte Mikrocontroller. Solche Mirocontroller können in sicherheitsrelevanten Systemen, beispielsweise Chipkarten, eingesetzt werden. Dabei dient der Mikrocontroller unter anderem dazu, den Datenverkehr zwischen einem Lesegerät und der Chipkarte zu verschlüsseln, Zugangsberechtigungen zu überprüfen und andere geheime Operationen auszuführen.

Es ist bekannt, daß zum Ausspähen der Funktion des Mikrocontrollers der zeitliche Ablauf des vom Mikrocontroller verbrauchten Stroms herangezogen werden kann. Aus dem Stromprofil können beispielsweise Triggerpunkte erhalten werden, um nachfolgende Messungen zeitrichtig zu steuern; oder es können Rückschlüsse auf den speziellen Typ der im Prozessor verwendet Berechnungs- und Ver-/Entschlüsselungsalgorithmen gezogen werden; oder es können gar Teile der verarbeiteten Nutzinformation ermittelt werden. besonders Buszugriffe erzeugen ein charakteristisches Stromprofil, da sie nach einem festgelegten Signalprotokoll ablaufen und die Schaltvorgänge aufgrund der hohen zu treibenden kapazitiven Lasten ein klares Stromprofil liefern. Die Anwendung herkömmlicher Mikrocontroller in sicherheitskritischen Anwendungen ist daher problematisch.

Die Druckschrift "Dallas Semiconductor Corp: Section 1: Introduction, vom 6. Oktober 1993, Data Book Soft Microcontroller" zeigt, dass in einer zufälligen Abfolge, auf dem Bus ein Dummyzyklus anstelle eines Realzyklus eingefügt ist. Ein Dummyzyklus umfasst dabei keine realen Daten, sondern lediglich zufällig generierte Daten, um die Abhörsicherheit des Bussystems zu erhöhen. Die Dummydaten werden dabei in einer zufällig wechselnden Abfolge von Dummyzyklen mit Realzyklen an Leitungen für die Bussignale angelegt. Ein solches Verfahren ermöglicht die Verschleierung oder die Tarnung von Realdaten mit Dummydaten und erhöht somit die Sicherheit gegenüber einem Ausspähen der übertragenen Daten, erhöht aber auch die Zeitdauer der Datenübertragung eines Datenpakets über das Bussystem.

Die Aufgabe der Erfindung besteht darin, ein Verfahren zum Betrieb einer Mikroprozessoranordnung anzugeben, das abhörsicher ist, und das gegenüber dem Stand der Technik verbessert ist.

Eine weitere Aufgabe besteht darin, eine zur Durchführung des Verfahrens geeignete Mikroprozessoranordnung anzugeben.

Gemäß der Erfindung wird die Aufgabe betreffend das Verfahren durch ein Verfahren gelöst zum Betrieb einer Mikroprozessoranordnung mit einer ersten Einheit und einer weiteren Einheit; einem Bus, über den die erste Einheit mit der weiteren Einheit verbunden ist und der eine Leitung für ein Zustandssignal, das den Betriebszustand des Busses angibt, und Leitungen für weitere Bussignale, die einen Datenwert angeben, umfaßt; einer Bussteuerungseinheit zur Steuerung von Zugriffen der ersten Einheit auf die weitere Einheit über den Bus; bei welchem Verfahren dann, wenn von der Bussteuerungseinheit über die Leitung für das Zustandssignal mitgeteilt wird, daß kein Zugriff von der ersten Einheit auf die weitere Einheit durchgeführt wird, ein Datenwert zufallsgesteuert erzeugt wird und an die Leitungen für die weiteren Bussignale angelegt wird.

Eine Mikroprozessoranordnung zur Durchführung des Verfahrens gemäß der Erfindung umfaßt: eine erste Einheit und eine weitere Einheit; einen Bus, über den die erste Einheit mit der weiteren Einheit verbunden ist und der eine Leitung für ein Zustandssignal, das den Betriebszustand des Busses angibt, und Leitungen für weitere Bussignale, die einen Datenwert angeben, umfaßt; eine Bussteuereinheit zur Steuerung von Zugriffen der ersten Einheit an die weitere Einheit über den Bus; einen Zufallsgenerator, der mit den Leitungen für die weiteren Bussignale verbindbar ist dann, wenn das Zustandssignal anzeigt, daß kein Zugriff von der ersten Einheit auf die weitere Einheit durchzuführen ist.

Das Buszustandssignal zeigt an, für welche Aufgabe der Bus von der zentralen Verarbeitungs- und Steuerungseinheit (CPU) im Moment benutzt wird. Wenn sich der Bus im betrachteten Taktabschnitt gerade im Ruhezustand befindet, liegen auf den Busdatenleitungen des Busses keine gültigen Signale an. Gemäß der Erfindung wird dann ein zufallsgesteuert erzeugtes Signal über di Datenleitungen des Busses übertragen. Hierdurch wird das Stromprofil zufallsmäßig verändert. Das Stromprofil wird dadurch in Bezug auf die über den Bus übertragene Nutzinformation verschleiert, so daß Rückschlüsse auf die Nutzinformation aufgrund einer statistischen Auswertung des Stromprofils wesentlich erschwert oder gar unmöglich gemacht werden.

Gemäß dem Busprotokoll kann vorgesehen sein, daß das Buszustandssignal den Zustand der Busleitungen einen Takt im voraus angibt. Es ist auch möglich, daß das Buszustandssignal den Zustand der die übrigen Busleitungen im gleichen Takt angibt.

Den von der CPU ansteuerbaren Einheiten sind Adressen zugeordnet. Wenn die CPU vermittels der Bussteuereinheit eine einem Speicher oder einer Peripherieeinheit zugeordnete Adresse ausgibt, bedeutet dies, daß der Speicher und eine darin enthaltene Speicherzelle beziehungsweise die entsprechende Peripherieeinheit zu aktivieren ist, um Daten vom Bus zu empfangen oder auf den Bus auszugeben. Bei der Erfindung wird dann, wenn von der CPU kein Zugriff auf eine an den Bus angeschlossene Einheit folgt, trotzdem eine Adresse auf den Bus ausgegeben. Diese Adresse ist jedoch keine Adresse, die einer an den Bus angeschlossenen Einheit zugeordnet ist, sondern eine beliebige andere Adresse. Dies hat zur Folge, daß keine der angeschlossenen Einheiten aktiviert wird. Trotzdem aber wird diese beliebige Adresse über den Bus übertragen und dadurch ein entsprechendes Stromprofil erzeugt. Diese Adresse wird zufallsgesteuert erzeugt. Das Stromprofil wird dementsprechend zufallsmäßig verändert. Es ist dabei sicherzustellen, daß die Zufallszahl nicht mit einer gültigen Adresse einer an den Bus angeschlossenen Einheit übereinstimmt.

Der auf den Bus auf diese Weise ausgegebene Datenwert enthält die Bedeutung einer Adresse durch den jeweiligen Zustand des Buszustandssignals. Das Buszustandssignal zeigt darüber hinaus an, daß an den Datenleitungen des Busses entweder eine Adresse ausgegeben wird oder ein Datum an die adressierte Einheit ausgegeben (geschrieben) wird. Für die Adressen und die zu lesenden oder zu schreibenden Daten könne die gleichen Signalleitungen des Busses verwendet werden. Dies wird als gemultiplexter Daten-/Adreßbus bezeichnet. Der Begriff Datenwert ist allgemein zu verstehen und umfaßt Datenwerte, die eine Adresse oder aktuell zu verarbeitende Daten oder Programmbefehle etc. repräsentieren. Nachdem das Buszustandssignal angezeigt hat, daß ein Ruhezustand vorliegt, wird im darauffolgenden Takt ein Zufallswert übertragen. Wird eine Adresse übertragen, für die keine an den Bus angeschlossene Einheit existiert, werden in den darauffolgenden Betriebstakten so lange Zufallswerte übertragen, bis wieder durch eine gültige Adresse eine vorhandene Einheit angesprochen wird. Bei bisherigen Mikroprozessoren stellte eine Adresse, die keiner angeschlossenen Einheit zugeordnet war, einen Programmierfehler dar. Bei der Erfindung hingegen ist die Übertragung einer solchen zufallsgesteuerten Adresse dahingehend zu verstehen, daß ein Zugriff auf ein nicht vorhandenes Ziel ausgeführt wird, um die ansonsten unbenutzten Buszyklen zu verschleiern.

Der Bus der Mikroprozessoranordnung kann zusätzlich eine Leitung für ein Freigabesignal umfassen, welches an die an den Bus angeschlossenen weiteren Einheiten geführt ist. Das Freigabesignal übermittelt diesen Einheiten, daß ein Zugriff über den Bus erfolgt. Auch die Freigabeleitung wird zweckmäßigerweise nach einem durch das Buszustandssignal signalisierten Ruhezustand mit Zufallswerten angesteuert.

Nachfolgend wird die Erfindung anhand des in der Zeichnung dargestellten Ausführungsbeispiels näher erläutert. Es zeigen:
- Figur 1: ein Blockdiagramm mit für die Erfindung relevanten Elementen eines Mikroprozessors und
- Figur 2: ein Signalablaufdiagramm.

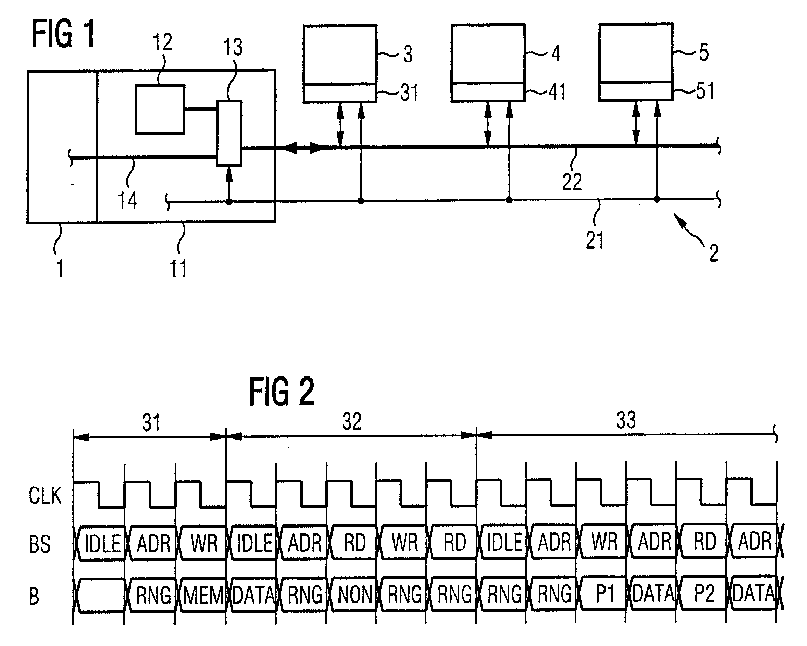

Der in Figur 1 dargestellte Mikrocontroller umfaßt eine zentrale Steuerungs- und Verarbeitungseinheit (CPU) 1, durch die die internen Betriebsabläufe, insbesondere die Zugriffe auf den Bus 2 gesteuert werden. Hierzu umfaßt die CPU 1 eine Bussteuerungseinheit 11. Der Bus selbst umfaßt mindestens eine Signalleitung 21, die den Buszustand angibt, und eine Vielzahl von Leitungen 22, über die sowohl Adressen von angeschlossenen Einheiten als auch Datenwerte nacheinander übertragen werden, so genannter gemultiplexter Daten-/Adreßbus. An den Bus 2 ist ein Speicher 3 angeschlossen, in dem zu verarbeitende Datenwerte und/oder Programmbefehle gespeichert sind. Weiterhin ist eine erste Peripherieeinheit 4 vorgesehen sowie eine zweite Peripherieeinheit 5, über die Daten mit chipextern angeschlossenen Funktionseinheiten ausgetauscht werden. Der Mikrocontroller findet beispielsweise Anwendung in einer Chipkarte, um mit einem Lesegerät zu kommunizieren. Jeder der an den Bus angeschlossenen Einheiten 3, 4, 5 weist eine Busschnittstelle 31, 41 bzw. 51 auf. Die Bussteuerungseinheit 11 und die Schnittstellen 31, 41, 51 arbeiten in Master-Slave-Abhängigkeit zusammen.

Wenn sich der Bus 2 im Ruhezustand befindet, d.h. keine der angeschlossenen Einheiten 3, 4, 5 von der CPU 1 für einen Zugriff aktiviert wird, dann wird von der Busteuereinheit lauf die Datenleitungen 22 eine Folge von zufallsgesteuert erzeugten Datenwerten ausgegeben. Zur Erzeugung der Zufallsdatenwerte dient ein Zufallsgenerator 12, der über einen Multiplexer 13 mit den Datenleitungen 22 des Busses verbunden ist. Wenn eine der Einheiten 3, 4, 5 von der CPU 1 angesprochen ist, schaltet der Multiplexer 13 auf den anderen Anschluß 14 um, welcher die gesendeten oder empfangenen Daten an die weiteren Funktionseinheiten der CPU 1 weiterleitet.

Das Buszustandssignal BS, welches auf der Leitung 21 übertragen wird, ist in Figur 2 zusammen mit den auf den Daten-/Adreßleitungen 22 übertragenen Datenwerten B dargestellt. Der Bus wird taktweise betrieben, so daß jeweilige Signalzustände eine Taktperiode des Takts CLK lang gültig sind. Das Buszustandssignal BS kann den Zustand IDLE für den Ruhezustand, den Zustand ADR für die Übertragung einer Adresse, den Zustand WR für einen Schreibvorgang, bei dem ein Datum von der CPU 1 an eine der Einheiten 3, 4, 5 übertragen wird, und einen Zustand RD für einen Lesevorgang, bei dem ein Datenwert aus einer der Einheiten 3, 4, 5 ausgelesen und an die CPU 1 übertragen wird, einnehmen. Der Bus ist derart gesteuert, daß der Zustand des Signals BS in einem ersten Takt den Zustand angibt, den die Datenwerte der Daten-/Adreßleitungen B im darauffolgenden nächsten Takt einnehmen. Dies bedeutet, daß die über die Adreß-/Datenleitungen 22 übertragenen Datenwerte dem unmittelbar einen Takt vorher übertragenen Zustand des Buszustandssignals BS entsprechen.

Die ersten drei Takte 31 zeigen den Signalablauf bei einem Schreibzugriff auf den Speicher 3. Im ersten Takt befindet sich der Bus im Ruhezustand, wobei das Buszustandssignal BS den Signalwert IDLE einnimmt. Im darauffolgenden Betriebstakt wird über die Daten-/Adreßleitungen 22 ein vom Zufallsgenerator 12 zufallsgesteuert erzeugter Datenwert RNG übertragen. Im nachfolgenden Takt wird das Buszustandssignal BS vom Busmaster 11 auf den Zustand ADR für die Adreßübertragung umgeschaltet. Dies bedeutet für die Daten-/Adreßsignalleitungen 22 des Busses, daß eine gültige Adresse MEM einer im Speicher 3 enthaltenen Speicherzelle übertragen wird. Nachfolgend signalisiert das Buszustandssignal BS einen Schreibvorgang WR. Die Busleitungen 22 führen dann den in den Speicher 3 an die Speicherzelle mit der im Takt vorher angegebenen Adresse MEM zu speichernden Datenwert DATA.

Anschließend erfolgt fünf Takte lang kein Zugriff der CPU 1 auf irgendeine der Einheiten 3, 4 oder 5. Hierzu wird zuerst einen Takt lang für das Buszustandssignal BS der Zustand IDLE übertragen. Auf den Daten-/Adreßleitungen 22 des Busses wird im unmittelbar darauffolgenden Takt ein Zufallsdatenwert RNG ausgegeben. Anschließend signalisiert das Buszustandssignal BS die Übertragung einer Adresse durch den Zustand ADR. Auf den Daten-/Adreßleitungen 22 wird dann ein Datenwert NON übertragen, welcher keiner der im Adreßraum der Einheiten 3, 4 und 5 liegenden Adresse entspricht. Der Datenwert NON wird zufallsgesteuert im Zufallsgenerator 12 erzeugt. Aus programmiertechnischer Sicht bedeutet dies, daß eine Einheit mit der Adresse NON angesprochen ist, welche es in realer Hardware nicht gibt. Nachfolgend nimmt das Buszustandssignal BS die Signalzustände RD, WR und RD ein. In den zugehörigen Taktabschnitten für die Adreß-/Datensignalleitungen 22 werden vom Zufallsgenerator 12 erzeugte Zufallswerte RNG übertragen. In der Praxis können weitaus mehr als nur die drei beispielhaft gezeigten Taktabschnitte mit der Übertragung von Zufallszahlenwerten auf den Adreß-/Datensignalleitungen vorliegen.

Nachfolgend wird das Buszustandssignal BS wiederum auf einen Ruhezustand IDLE umgeschaltet, wobei auf den Adreß/Datenleitungen ein Zufallswert RNG übertragen wird. Anschließend erfolgt ein Schreibzugriff auf die Peripherieeinheit 4 mit der Adresse P1 und ein Lesezugriff auf die Peripherieeinheit 5 mit der Adresse P2.

Bei der Erfindung wird auf den Daten-/Adreßleitungen 22 des Busses 2 dann, wenn kein Zugriff auf eine der angeschlossenen Peripherieeinheiten 3, 4 oder 5 durch die CPU 1 angefordert wird, ein Zufallsdatenwert ausgegeben. Dies ist dann der Fall, wenn das Buszustandssignal BS anzeigt, dass ein Ruhezustand vorliegt (IDLE), oder eine Einheit adressiert worden ist, die keiner der angeschlossenen Einheiten zugeordnet ist, um anschließend zufallsgesteuert erzeugte Datenwerte während eines Bussignalzustands WR oder RD auf den Bus auszugeben. Auf diese Weise wird das Stromprofil des Mikrocontrollers verschleiert.

## Patentansprüche

1. Verfahren zum Betrieb einer Mikroprozessoranordnung mit
- einer ersten Einheit (1) und einer weiteren Einheit (3, 4, 5),
- einem Bus (2), über den die erste Einheit (1) mit der weiteren Einheit (3, 4, 5) verbunden ist und der Leitungen (22) für Bussignale (B), die einen Datenwert angeben, umfasst,
- einer Bussteuereinheit (11) zur Steuerung von Zugriffen der ersten Einheit (1) auf die weitere Einheit (3, 4, 5) über den Bus (2),
**gekennzeichnet, durch**
- eine Leitung (21) für ein Zustandssignal, das den Betriebszustand des Busses (2) angibt,
- bei dem dann, wenn von der Bussteuereinheit (11) über die Leitung (21) für das Zustandssignal (BS) mitgeteilt wird, daß kein Zugriff von der ersten Einheit (1) auf die weitere Einheit (3, 4, 5) durchgeführt wird, ein Datenwert zufallsgesteuert erzeugt wird und an die Leitungen (22) für die weiteren Bussignale (B) angelegt wird.

2. Verfahren nach Anspruch 1,
**dadurch gekennzeichnet, daß**
die Bussteuereinheit (11) das Zustandssignal und den Datenwert (B) taktweise erzeugt und daß dann, wenn in einem ersten Takt mitgeteilt wird, daß kein Zugriff von der ersten Einheit (1) auf die weitere Einheit (3, 4, 5) durchgeführt wird, in einem nachfolgenden Takt der zufallsgesteuert erzeugte Datenwert erzeugt und an die Leitungen (22) für die weiteren Bussignale (B) angelegt wird.

3. Verfahren nach Anspruch 2,
**dadurch gekennzeichnet, daß**
der weiteren Einheit (3) der Mikroprozessoranordnung eine Adresse zugeordnet ist, durch die von der ersten Einheit (1) auf die weitere Einheit (3) zugreifbar ist, daß im nachfolgenden Takt nach einem ersten Takt, in dem mitgeteilt wird, daß kein Zugriff von der ersten Einheit auf die weitere Einheit durchgeführt wird, eine andere als die der weiteren Einheit zugeordnete Adresse an die Leitungen (22) für die weiteren Bussignale (B) angelegt wird.

4. Verfahren nach Anspruch 3,
**dadurch gekennzeichnet, daß**
in einem dem nachfolgenden Takt wiederum nachfolgenden Takt ein Lese- oder ein Schreibzugriff über den Bus (2) ausgeführt wird.

5. Verfahren nach Anspruch 4,
**dadurch gekennzeichnet, daß**
das Zustandssignal Signalzustände für einen Lesezugriff und einen Schreibzugriff umfaßt und daß auf der Leitung (21) für das Zustandssignal einer dieser Signalzustände angelegt wird und daß zugeordnet an den Leitungen (22) für die weiteren Bussignale (B) ein zufallsgesteuert erzeugter Datenwert angelegt wird.

6. Verfahren nach Anspruch 5,
**dadurch gekennzeichnet, daß**
der Bus (2) der Mikroprozessoranordnung eine Leitung für ein Freigabesignal der weiteren Einheit umfaßt und daß dann, wenn von der Bussteuereinheit über die Leitung für das Zustandssignal mitgeteilt wird, daß kein Zugriff von der ersten Einheit auf die weitere Einheit durchgeführt wird, an die Leitung für das Freigabesignal ein zufallsgesteuert erzeugtes Signal angelegt wird.

7. Mikroprozessoranordnung zur Durchführung des Verfahrens nach einem der Ansprüche 1 bis 6, die umfaßt:
- eine erste Einheit (1) und eine weitere Einheit (3, 4, 5),
- einen Bus (2), über den die erste Einheit (1) mit der weiteren Einheit (3, 4, 5) verbunden ist und der vorgesehen ist, Leitungen (22) für weitere Bussignale (B), die einen Datenwert angeben, umfaßt,
- eine Bussteuereinheit (11) zur Steuerung von Zugriffen der ersten Einheit (1) an die weitere Einheit (3, 4, 5) über den Bus (2),
**gekennzeichnet, durch**
- eine Leitung (21) für ein Zustandssignal, das den Betriebszustand des Busses (2) angibt,
- einen Zufallsgenerator (12), der, wenn von der Bussteuereinheit (11) über die Leitung (21) für das Zustandssignal (BS) mitgeteilt wird, daß kein Zugriff von der ersten Einheit (1) auf die weitere Einheit (3, 4, 5) durchgeführt wird, ein Datenwert zufallsgesteuert erzeugt und an die Leitungen (22) für die weiteren Bussignale (B) anlegt.

8. Mikroprozessoranordnung nach Anspruch 7,
**dadurch gekennzeichnet, daß**
die erste Einheit (1) eine Verarbeitungs- und Steuereinheit eines Mikroprozessors ist und daß die weitere Einheit eine Peripherieeinheit (4, 5) eines Mikroprozessors zur Ein- und Ausgabe von Signalen vom und zum Mikroprozessor oder ein Speicher (3) ist.

## Claims

1. Method for operating a microprocessor arrangement having
- a first unit (1) and a further unit (3, 4, 5),
- a bus (2), via which the first unit (1) is connected to the further unit (3, 4, 5) and which comprises lines (22) for bus signals (B), which specify a data value,
- a bus control unit (11) for controlling accesses of the first unit (1) to the further unit (3, 4, 5) via the bus (2),
**characterized by**
- a line (21) for a state signal, which specifies the operating state of the bus (2),
- in which, when the bus control unit (11) communicates via the line (21) for the state signal (BS) that no access is being carried out by the first unit (1) to the further unit (3, 4, 5), a data value is generated in a randomly controlled manner and is applied to the lines (22) for the further bus signals (B).

2. Method according to Claim 1,
**characterized in that**
the bus control unit (11) generates the state signal and the data value (B) clock-cyclically, and **in that**, when it is communicated in a first clock cycle that no access is being carried out by the first unit (1) to the further unit (3, 4, 5), in a subsequent clock cycle the data value that is generated in a randomly controlled manner is generated and applied to the lines (22) for the further bus signals (B).

3. Method according to Claim 2,
**characterized in that**
the further unit (3) of the microprocessor arrangement is assigned an address by means of which the further unit (3) can be accessed by the first unit (1), **in that**, in the subsequent clock cycle after a first clock cycle in which it is communicated that no access is being carried out by the first unit to the further unit, an address different than that assigned to the further unit is applied to the lines (22) for the further bus signals (B).

4. Method according to Claim 3,
**characterized in that**,
in a clock cycle again following the subsequent clock cycle, a read or a write access is executed via the bus (2).

5. Method according to Claim 4,
**characterized in that**
the state signal comprises signal states for a read access and a write access, and **in that** one of said signal states is applied on the line (21) for the state signal, and **in that** a data value generated in a randomly controlled manner is applied in an assigned manner to the lines (22) for the further bus signals (B).

6. Method according to Claim 5,
**characterized in that**
the bus (2) of the microprocessor arrangement comprises a line for an enable signal of the further unit, and **in that**, when the bus control unit communicates via the line for the state signal that no access is being carried out by the first unit to the further unit, a signal generated in a randomly controlled manner is applied to the line for the enable signal.

7. Microprocessor arrangement for carrying out the method according to one of Claims 1 to 6, which comprises:
- a first unit (1) and a further unit (3, 4, 5),
- a bus (2), via which the first unit (1) is connected to the further unit (3, 4, 5) and which is provided comprises lines (22) for further bus signals (B), which specify a data value,
- a bus control unit (11) for controlling accesses of the first unit (1) to the further unit (3, 4, 5) via the bus (2),
**characterized by**
- a line (21) for a state signal, which specifies the operating state of the bus (2),
- a random number generator (12), which, when the bus control unit (11) communicates via the line (21) for the state signal (BS) that no access is being carried out by the first unit (1) to the further unit (3, 4, 5), generates a data value in a randomly controlled manner and applies it to the lines (22) for the further bus signals (B).

8. Microprocessor arrangement according to Claim 7, **characterized in that**
the first unit (1) is a processing and control unit of a microprocessor, and **in that** the further unit is a peripheral unit (4, 5) of a microprocessor for inputting and outputting signals from and to the microprocessor or is a memory (3).

## Revendications

1. Procédé pour faire fonctionner un système à microprocesseur comprenant
- une première unité (1) et une autre unité (3, 4, 5),
- un bus (2), par lequel la première unité (1) est reliée à l'autre unité (3, 4, 5) et qui comprend des lignes (22) pour des signaux (B) de bus, qui indiquent une valeur de données,
- une unité (11) de commande de bus pour la commande d'accès de la première unité (1) à l'autre unité (3, 4, 5) par l'intermédiaire du bus (2),
**caractérisé par**
- une ligne (21) pour un signal d'état, qui indique l'état de fonctionnement du bus (2),
- dans lequel, lorsqu'il est fait part, par l'unité (11) de commande de bus par l'intermédiaire de la ligne (21) pour le signal (BS) d'état, qu'un accès n'est pas effectué par la première unité (1) à l'autre unité (3, 4, 5), une valeur de données est produite d'une manière commandée aléatoirement et est créée sur les lignes (22) pour les autres signaux (B) de bus.

2. Procédé suivant la revendication 1,
**caractérisé en ce que**
l'unité (11) de commande de bus produit en cadence le signal d'état et la valeur (B) de données et **en ce que**, lorsqu'il est fait part dans une première cadence qu'un accès n'a pas été effectué par la première unité (1) à l'autre unité (3, 4, 5), dans une cadence suivante la valeur de données produite d'une manière commandée aléatoirement est produite et est créée sur les lignes (22) pour les autres signaux (B) de bus.

3. Procédé suivant la revendication 2,
**caractérisé en ce que**
il est affecté à l'autre unité (3) du système à microprocesseur une adresse, par laquelle il peut être accédé par la première unité (1) à l'autre unité (3), **en ce que**, dans la cadence suivant une première cadence, dans laquelle il est fait part qu'un accès n'a pas été effectué par la première unité à l'autre unité, une autre adresse que celle affectée à l'autre unité est créée sur les lignes (22) pour les signaux (B) de bus.

4. Procédé suivant la revendication 3,
**caractérisé en ce que**
dans une cadence suivant à nouveau la cadence suivante, un accès en lecture ou un accès en écriture est réalisé par l'intermédiaire du bus (2).

5. Procédé suivant la revendication 4,
**caractérisé en ce que**
le signal d'état comprend des états de signal pour un accès en lecture et pour un accès en écriture et **en ce qu'**il est créé, sur la ligne (21) pour le signal d'état, l'un de ces états de signal et **en ce qu'**il est créé, affectée aux lignes (22) pour les autres signaux (B) de bus, une valeur de données produite d'une manière commandée aléatoirement.

6. Procédé suivant la revendication 5,
**caractérisé en ce que**
le bus (2) du système à microprocesseur comprend une ligne pour un signal de libération de l'autre unité et **en ce que**, lorsqu'il est fait part, par l'unité de commande de bus par l'intermédiaire de la ligne pour le signal d'état, qu'un accès n'a pas été effectué par la première unité à l'autre unité, il est créé sur la ligne pour le signal de libération un signal produit de manière commandée aléatoirement.

7. Système à microprocesseur pour effectue le procédé suivant l'une des revendications 1 à 6, qui comprend :
- une première unité (1) et une autre unité (3, 4, 5),
- un bus (2), par lequel la première unité (1) est reliée à l'autre unité (3, 4, 5) et qui est prévu pour comprendre les lignes (22) pour d'autres signaux (B) de bus, qui indiquent une valeur de données,
- une unité (11) de commande de bus pour la commande d'accès de la première unité (1) à l'autre unité (3, 4, 5) par l'intermédiaire du bus (2)
**caractérisé par**
- une ligne (21) pour un signal d'état, qui indique l'état de fonctionnement du bus,
- un générateur (12) aléatoire, qui, lorsqu'il est fait part, par l'unité (11) de commande de bus par l'intermédiaire de la ligne (21) pour le signal (BS) d'état, qu'un accès n'a pas été effectué par la première unité (1) à l'autre unité (3, 4, 5), produit d'une manière commandée aléatoirement une valeur de données et l'applique aux lignes (22) pour les autres signaux (B) de bus.

8. Système à microprocesseur suivant la revendication 7, **caractérisé en ce que**
la première unité (1) est une unité de traitement et de commande d'un microprocesseur et **en ce que** l'autre unité est une unité (4, 5) périphérique d'un microprocesseur d'entrée de signaux à un microprocesseur et de sortie de signaux d'un microprocesseur ou une mémoire.
